# EUROPÄISCHE PATENTSCHRIFT

(11) **EP 2 722 231 B1**
(45) Veröffentlichungstag und Bekanntmachung des Hinweises auf die Patenterteilung: **06.12.2017**
(21) Anmeldenummer: 13005006.5
(22) Anmeldetag: 18.10.2013
(51) Int. Cl.: B60R 7/06

(54) **Vorrichtung zur Abdeckung eines Ablagefachs sowie Ablagefach-Vorrichtung**
Device for covering a storage compartment and storage compartment arrangement
Dispositif de recouvrement d'un compartiment de rangement et dispositif de compartiment de rangement

(30) Priorität: 18.10.2012 DE 102012020479
(43) Veröffentlichungstag der Anmeldung: 23.04.2014
(73) Patentinhaber: Faurecia Innenraum Systeme GmbH, 76767 Hagenbach (DE)
(72) Erfinder: Bohnenberger, Thorsten, 67630 Scheibenhard (FR)
(74) Vertreter: Schatt, Markus F.

(56) Entgegenhaltungen:
- EP-A1- 2 213 510
- FR-A1- 2 896 207
- FR-A1- 2 904 798

## Beschreibung

Die Erfindung betrifft eine Vorrichtung zum Abdecken eines Ablagefachs, das insbesondere ein Handschuhfach im Innenraum eines Kraftfahrzeugs sein kann, sowie eine Ablagefach-Vorrichtung.

Die DE 10 2004 053 322 B3 offenbart einen Fachdeckel mit einem Ablageschubfach, das in einer im Fachdeckel ausgebildeten Führung geführt gehalten ist, und mit einem Übersetzungs-Hebelgestänge, das außerhalb des Deckels ortsfest abstützbar und derart ausgeführt ist, dass beim Öffnen des Fachdeckels gleichzeitig das Ablageschubfach relativ zum Fachdeckel bewegt wird.

Aus der US 2 789 861 A ist eine Vorrichtung bekannt, bei der die Abdeckung zur Freigabe des Ablagefachs mittels einer einfachen Scharnierachse aufklappbar ist und dabei mit seiner Innenseite eine zusätzliche Ablagefläche bildet.

Aus der DE 43 27 869 C1 ist eine im Bereich des Armaturenbretts in Höhe des Beifahrersitzes eines Nutzfahrzeugs angeordnete Vorrichtung bekannt, bei der aus einem im Normalfall abgedeckten Ablagefach ein tablettförmiger Arbeitstisch ausklappbar ist.

Aus der WO 2010/044612 A2 ist eine oberhalb eines mittels eines Deckels verschließbaren Ablagefachs angeordnete, unabhängig von der Öffnung des Ablagefachs herausziehbare Ablageplatte bekannt.

Aus der FR 2 949 722 A ist eine an der Außenseite eines Deckels eines Ablagefachs schwenkbar gelagerte Ablageplatte bekannt.

Die FR 2 896 207 A1 offenbart ein Ablagefach für den Innenraum eines Fahrzeugs mit einem in einem bewegbaren Rahmen gelagerten schwenkbaren Deckel zum Freigeben einer von dem Rahmen definierten Ablagefach-Öffnung, wobei der Rahmen in mit einem oberen Bereich in seitlichen Führungsbahnen geführt ist.

Der vorliegenden Erfindung liegt die Aufgabe zugrunde, eine Vorrichtung zum Abdecken eines Öffnungsbereichs eines Ablagefachs sowie eine Ablagefach-Vorrichtung anzugeben, bei der jeweils eine Abdeckung eine Ablagefläche bereitstellt und die eine Verstellkinematik aufweist, die an Einbaugegebenheiten des jeweiligen Ablagefachs anpassbar ist.

Diese Aufgabe wird durch die Merkmale der unabhängigen Patentansprüche gelöst. Weitere Ausführungsformen sind in den Unteransprüchen angegeben.

Generell wird die Aufgabe gelöst durch eine Vorrichtung zum Abdecken eines Ablagefachs mit einer Abdeckung, deren Innenseite in geöffnetem Zustand eine Ablagefläche bildet, wobei die Abdeckung aus ihrer Schließposition mittels wenigstens einer Deckplatten-Führung zur Bildung der Ablagefläche in eine im Wesentlichen horizontale oder in eine horizontale Ablageposition oder in eine Verstau-Position verfahrbar ist, wobei das Ablagefach in der Ablagestellung und in der Verstau-Position zumindest teilweise geöffnet ist.

Die Vorrichtung kann zumindest ein an die Deckplatte angekoppeltes Führungsglied aufweisen, das in zumindest einer ersten am Ablagefach angeordneten Führungsvorrichtung der Deckplatten-Führung mit einer Führungsbahn, in die ein Führungsglied aufgenommen ist, verschiebbar geführt wird, wobei die Deckplatte an einem Führungsteil angekoppelt ist, das mit einem ersten Endstück in zumindest einer zweiten am Ablagefach angeordneten Führungsvorrichtung der Deckplatten-Führung verschiebbar geführt ist und mit einem zweiten Endstück, das entgegengesetzt zu dem ersten Endstück gelegen ist, an einem oberen Bereich oder Abschnitt der Deckplatte angelenkt ist.

Die Vorrichtung zum Abdecken eines Ablagefachs wird hierin als eine Deckplatten-Verstellvorrichtung verstanden, die eine Abdeckung insbesondere in Form einer Deckplatte aufweist. Das Ablagefach, an dem die Deckplatten-Verstellvorrichtung angeordnet ist, kann insbesondere ein Handschuhfach sein, das an einer Tragkonstruktion im Innenraum eines Kraftfahrzeugs angebracht ist oder integriert ist. Das Ablagefach ist insbesondere als ein Aufbewahrungsbehälter oder ein Gehäuse ausgeführt, der bzw. das einen Öffnungsbereich zum Hindurchbewegen von Gegenständen aufweist, um diese in dem Aufbewahrungsbehälter oder dem Gehäuse abzulegen. Dieser Öffnungsbereich ist bei einem bestimmungsgemäßen Einbau in einer Tragkonstruktion von dieser freigelassen.

Aufgrund dieses Öffnungsbereichs und aufgrund der Abdeckung oder der Deckplatte, die in ihrem Schließzustand diesen Öffnungsbereich ganz oder teilweise abdeckt, definiert sich eine Längsrichtung als Referenzrichtung, also eine Referenz-Längsrichtung, sowie eine Vertikalebene als Referenzebene, also eine Referenz-Vertikalebene. Die Referenz-Längsrichtung kann dabei insbesondere derart definiert sein, dass diese senkrecht auf der Innenfläche der Abdeckung oder der Deckplatte, wenn sich diese in ihrem Schließzustand befindet, im Flächenmittelpunkt derselben von dieser absteht. Auch kann generell eine Ablagefach-Längsrichtung definiert sein, die sich von einer an der vorderen Seite des Ablagefachs ausgebildeten Ablagefach-Öffnung zu einer Rückwand desselben erstreckt. Die Referenz-Vertikalebene kann derart definiert sein, dass die Referenz-Längsrichtung sowie eine Abstandslinie in dieser gelegen ist, wobei die Abstandslinie die die Referenz-Längsrichtung kreuzende Linie des kürzesten Abstandes zwischen zwei gegenüber liegenden Randpunkten von Randabschnitten der Abdeckung oder der Deckplatte ist, die entgegen gesetzt zu einander gelegen sind. In analoger Weise kann eine Referenz-Längsrichtung und eine Referenz-Vertikalebene für den Öffnungsbereich des Aufbewahrungsbehälters oder des Gehäuses definiert werden.

Auf dieser Basis kann hierin unter Referenz-Horizontalebene eine Ebene verstanden werden, die senkrecht auf der Referenz-Vertikalebene steht und in der die Referenz-Längsrichtung gelegen ist.

Auf dieser Basis kann hierin weiterhin unter "horizontal" oder einer "horizontalen Richtung" eine Richtung verstanden werden, die in einer Horizontalebene liegt, die senkrecht zu der Referenz-Vertikalebene gelegen ist und in der die Referenz-Längsrichtung liegt.

Die Richtungsbezeichnung "im Wesentlichen horizontal" bezeichnet hierin insbesondere eine Richtung, die zu ihrer senkrechten Projektionsgeraden, also ihrer senkrechten Projektion auf die Horizontalebene, von dieser ausgehend einen Winkel zwischen - 60 Grad und +60 Grad einnimmt. In diesem Sinne bezeichnet "horizontale Führung" insbesondere eine Führungsvorrichtung, die einem darin geführten Element eine geradlinige Bewegungsbahn erlaubt, deren Richtung im zuvor angegebenen Bereich liegt, oder einen nicht-geradlinigen oder gekrümmte Bewegungsbahn erlaubt, deren Richtung oder Tangente im zuvor angegebenen Bereich liegt.

Die Richtungsbezeichnung "im Wesentlichen vertikal" bezeichnet hierin insbesondere eine Richtung,
- die zu ihrer senkrechten Projektionsgeraden auf eine Ebene, auf der die Referenz-Längsrichtung senkrecht steht, von dieser ausgehend einen Winkel zwischen - 60 Grad und +60 Grad einnimmt, und
- die zu ihrer senkrechten Projektionsgeraden auf die Referenz-Vertikalebene, von dieser ausgehend einen Winkel zwischen - 60 Grad und +60 Grad einnimmt.

In diesem Sinne bezeichnet "vertikale Führung" insbesondere eine Führungsvorrichtung, die einem darin geführten Element eine geradlinige Bewegungsbahn erlaubt, deren Richtung im mit "im Wesentlichen vertikal" definierten Bereich liegt, oder einen nicht-geradlinigen oder gekrümmte Bewegungsbahn erlaubt, deren Richtung oder Tangente in dem mit "im Wesentlichen vertikal" definierten Bereich liegt. Analoges gilt für eine "horizontale Führung", die insbesondere eine Führungsvorrichtung bezeichnet, die einem darin geführten Element eine geradlinige Bewegungsbahn erlaubt, deren Richtung im mit "im Wesentlichen horizontal" definierten Bereich liegt, oder einen nicht-geradlinigen oder gekrümmte Bewegungsbahn erlaubt, deren Richtung oder Tangente in dem mit "im Wesentlichen horizontal" definierten Bereich liegt.

Die Bezeichnung "oben" und "unten" beziehen sich auf die Schwerkraftrichtung und die Lage der Deckplatten-Verstellvorrichtung und insbesondere ihrer Deckplatte bei ihrem bestimmungsgemäßen Einbau in eine Tragkonstruktion im Innenraum eines Kraftfahrzeugs, wobei eine Richtung, die entlang der Schwerkraftrichtung verläuft, nach "unten" weist.

Bei der Vorrichtung zum Abdecken eines Ablagefachs kann an die Abdeckung oder Deckplatte mit wenigstens einem Führungsglied oder Führungselement oder einem geführten Anschlussteil insbesondere gelenkig angekoppelt sein, das in zumindest einer ersten am Ablagefach angeordneten, angekoppelten oder befestigten Führungsvorrichtung der Deckplatten-Führung mit einer Führungsbahn, in die das Führungsglied aufgenommen ist, verschiebbar geführt wird. Dabei kann die Deckplatte an einem Führungsteil oder Stellteil angekoppelt sein, das mit einem ersten Endstück in zumindest einer zweiten am Ablagefach angeordneten oder angekoppelten Führungsvorrichtung der Deckplatten-Führung verschiebbar geführt ist und mit einem zweiten Endstück, das entgegen gesetzt zu dem ersten Endstück gelegen ist, an einem oberen Bereich oder Abschnitt der Deckplatte angelenkt ist. Die erste Führungsvorrichtung kann Teil der Deckplatten-Verstellvorrichtung oder Teil des Ablagefachs sein.

Insbesondere kann die Führung von zumindest einer im Wesentlichen vertikalen Führung und zumindest einer im Wesentlichen horizontalen Führung gebildet sein. Insbesondere kann vorgesehen sein, dass die erste Führungsvorrichtung für das Führungsglied oder das geführte Anschlussteil eine im Wesentlichen vertikale Führung ist. Auch kann vorgesehen sein, dass die zweite Führungsvorrichtung eine im Wesentlichen horizontale Führung ist.

Das Führungsglied kann insbesondere im unteren Bereich oder an der unteren Kante der Deckplatte angeordnet sein. Die Bezeichnung "im unteren Bereich der Deckplatte" kann hierin insbesondere generell einen Bereich definieren, der unterhalb der Referenz-Horizontalebene gelegen ist, wenn diese auf einer Höhe gelegen ist, die die genannte Abstandslinie an einer Distanz von maximal einem Drittel ihrer Gesamtlänge von der unteren Kante aus gesehen schneidet. Zur Vereinfachung der Kinematik der Deckplatten-Verstellvorrichtung kann vorgesehen sein, dass das zumindest eine Führungsglied auf einer Höhe gelegen ist, die die genannte Abstandslinie an einer Distanz von maximal einem Viertel ihrer Gesamtlänge von der unteren Kante aus gesehen schneidet.

Die Deckplatte kann an einem oberen Bereich an dem zumindest einen Stellteil angelenkt sein. Die Bezeichnung "im oberen Bereich der Deckplatte" kann hierin insbesondere generell einen Bereich definieren, der oberhalb der Referenz-Horizontalebene gelegen ist, wenn diese auf einer Höhe gelegen ist, die die genannte Abstandslinie an einer Distanz von maximal einem Drittel ihrer Gesamtlänge von der oberen Kante aus gesehen schneidet. Zur Vereinfachung der Kinematik der Deckplatten-Verstellvorrichtung kann vorgesehen sein, dass das zumindest eine Stellteil auf einer Höhe gelegen ist, die die genannte Abstandslinie an einer Distanz von maximal einem Viertel ihrer Gesamtlänge von der oberen Kante aus gesehen schneidet.

Nach einer Ausführungsform der Deckplatten-Verstellvorrichtung kann dabei weiterhin die Abdeckung mit wenigstens einer, der im Wesentlichen horizontalen Führung zugeordneten Führungsleiste schwenkbar verbunden sein. Bei den genannten Ausführungsformen kann die im Wesentlichen horizontale Führung im oberen Bereich des Ablagefaches angeordnet sein. Die Abdeckung kann in der Verstau-Position zumindest überwiegend vom Ablagefach aufgenommen sein. Dabei weist die Deckplatten-Verstellvorrichtung eine Abdeckung auf, deren Innenseite in geöffnetem Zustand eine Ablagefläche bildet, wobei die Abdeckung aus ihrer Schließposition mittels wenigstens einer Führung zur Bildung der Ablagefläche, die insbesondere von einer im Wesentlichen vertikalen Führung und einer im Wesentlichen horizontalen Führung gebildet wird, in eine horizontale Ablageposition oder in eine Verstau-Position verfahrbar ist, wobei das Ablagefach in der Ablagestellung und in der Verstau-Position zumindest teilweise geöffnet ist.

Nach einer zu den Ausführungsformen mit zumindest einer Führungsleiste einer ersten Führungsvorrichtung alternativen Ausführungsform der Deckplatten-Verstellvorrichtung kann vorgesehen sein, dass anstelle der Führungsleiste eine sich in derselben Weise erstreckende Führungsbahn zur Aufnahme des an der Deckplatte angeordneten Führungsteils vorgesehen ist und die Abdeckung mit wenigstens einem Führungshebel verbunden ist, der an zwei parallelen Führungen einer zweiten Führungsvorrichtung verschiebbar geführt ist.

Bei den genannten Ausführungsformen kann vorgesehen sein, dass an der

Führungsbahn der ersten Führungsvorrichtung der im Wesentlichen horizontalen Führung wenigstens ein elastisches Element oder Federelement zum Eindrücken des Führungsgliedes in die Rastmulde angeordnet ist.

Bei den genannten Ausführungsformen kann vorgesehen sein, dass eine im Wesentlichen horizontale Führung wenigstens eine Durchtrittsöffnung aufweist, über die sie zumindest phasenweise mit der im Wesentlichen vertikalen Führung in Verbindung steht. Auch kann bei den genannten Ausführungsformen vorgesehen sein, dass die im Wesentlichen horizontale Führung wenigstens eine Rastmulde zur Aufnahme des Führungsgliedes in der Ablageposition oder in der Verstau-Position aufweist.

Nach der Erfindung kann bei jeder Ausführungsform vorgesehen sein, dass die Führung bzw. die im Wesentlichen vertikale Führung und die im Wesentlichen horizontale Führung sich in oder entlang der Referenz-Längsrichtung der Vorrichtung zum Abdecken eines Ablagefachs bzw. der Deckplatten-Verstellvorrichtung erstrecken. Die Vorrichtung zum Abdecken eines Ablagefachs oder der Deckplatten-Verstellvorrichtung nach der Erfindung weist auf:
- eine Abdeckung oder Deckplatte zum Abdecken der Ablagefach-Öffnung, aufweisend eine als Ablagefläche ausgeführte Innenseite,
- zwei sich in der Ablagefach-Längsrichtung erstreckende seitliche Führungsteile zum Einsetzen in jeweils eine insbesondere an einer oberen Deckwand des Ablagefachs angeordneten seitliche Führung des Ablagefachs zur Führung einer insbesondere translatorischen Bewegung der Führungsteile entlang der Ablagefach-Längsrichtung, wobei an einem Endstück und insbesondere den vorderen Enden der Führungsteile die Abdeckung unter Ausbildung einer Drehachse angelenkt ist,
- zwei sich quer zur Ablagefach-Längsrichtung erstreckende Führungen, die sich jeweils seitlich und entlang der Öffnung des Ablagefachs quer zur Ablagefach-Längsrichtung insbesondere nach oben und insbesondere bis zu der oberen Deckwand erstrecken,
wobei die Abdeckung zumindest ein Führungsglied an ihrer Unterkante oder dem genannten unteren Bereich aufweist, das verschiebbar in der Führungsbahn gelagert ist,
wobei jedes Führungsglied in der jeweiligen Führung in Richtung zu der oberen Deckwand in eine Stellung bewegt werden kann, in der die Abdeckung die Ablagefach-Öffnung freigibt und in der sich die Ablagefläche der Abdeckung entlang der Ablagefach-Längsrichtung erstreckt, so dass die Ablagefläche der Abdeckung zur Ablage eines Gegenstands verwendbar ist.

Nach einer Ausführungsform der Deckplatten-Verstellvorrichtung ist vorgesehen, dass jedes der zwei sich in der Ablagefach-Längsrichtung erstreckenden seitlichen Führungsteile zum Einsetzen in jeweils eine insbesondere an einer oberen Deckwand des Ablagefachs angeordneten seitliche Führung aus jeweils einer sich in der Ablagefach-Längsrichtung erstreckenden seitlichen Führungsleiste gebildet ist, die zum Einsetzen in jeweils eine seitliche Führung des Ablagefachs vorgesehen sind und an deren vorderen Enden die Abdeckung angelenkt ist. Dabei kann insbesondere vorgesehen sein, dass jede Führungsleiste wenigstens eine Durchtrittsöffnung aufweist, und wobei jede der zwei sich quer zur Ablagefach-Längsrichtung erstreckenden Führungen mit jeweils einer der Führungsleisten derart in Verbindung steht, dass die Führungsteile, die in den sich quer zur Ablagefach-Längsrichtung erstreckenden Führungen gelegen sind, über die jeweilige Durchtrittsöffnung in die angeschlossene Führungsleiste eingeführt werden kann.

Nach einer Ausführungsform der Deckplatten-Verstellvorrichtung ist vorgesehen, dass jede Führungsleiste eine Rastmulde aufweist, in die das jeweilige Führungsglied eingelegt werden kann, wenn dieses in der jeweiligen Führung in Richtung zu der Führungsleiste, die an der jeweiligen Führung angeordnet ist, bewegt wird, so dass mit in jeder der Rastmulden eingelegtem Führungsglied die Führungsleisten in den Führungen verschoben werden können, um die Abdeckung in eine Stellung zu bewegen, in der diese die Ablagefach-Öffnung freigibt und in das Ablagefach eingefahren ist, und in der die Ablagefläche der Abdeckung zur Ablage eines Gegenstands verwendbar ist. Dabei kann vorgesehen sein, dass an jeder der Führungsleisten wenigstens ein elastisches Element oder Federelement zum Eindrücken des Führungsgliedes in die Rastmulde angeordnet ist.

Nach einer zu den Ausführungsformen mit zumindest einer Führungsleiste alternativen Ausführungsform der Deckplatten-Verstellvorrichtung kann vorgesehen sein, dass die zwei sich in der Ablagefach-Längsrichtung erstreckenden seitlichen Führungsteile jeweils durch einen Führungshebel realisiert sind, der derart an die jeweilige seitliche Führung des Ablagefachs ankoppelbar ist, dass dieser translatorische Bewegungen entlang der Ablagefach-Längsrichtung ausführt, so dass die Abdeckung mit den zwei Führungshebeln verbunden ist, der an zwei parallelen Führungen verschiebbar geführt ist, wobei an den vorderen Enden der Führungshebel die Abdeckung unter Ausbildung einer Drehachse angelenkt ist.

Dabei kann vorgesehen sein, dass die Vorrichtung zum Abdecken eines Ablagefachs die zwei sich quer zur Ablagefach-Längsrichtung erstreckenden Führungen an jeweils eine zusätzliche, im oberen Bereich des Ablagefachs angeordnete und sich in der Ablagefach-Längsrichtung erstreckende Führung derart angeschlossen ist, dass das jeweilige Führungsglied von der sich quer zur Ablagefach-Längsrichtung erstreckenden Führung über eine jeweilige Durchtrittsöffnung in die zusätzliche, im oberen Bereich des Ablagefachs angeordnete Führung einführbar ist und umgekehrt, so dass die Abdeckung in eine Stellung bewegt werden kann, in der diese die Ablagefach-Öffnung freigibt und in das Ablagefach eingefahren ist, und in der die Ablagefläche der Abdeckung zur Ablage eines Gegenstands verwendbar ist.

Nach einer Ausführungsform der Deckplatten-Verstellvorrichtung mit einem Führungshebel kann vorgesehen sein, dass jeder Führungshebel gebildet ist aus:
- einem ersten, sich quer zur Ablagefach-Längsrichtung erstreckenden Hebelarm, der an seinem unteren Ende in eine sich im unteren Bereich des Ablagefachs angeordnete und sich entlang der Ablagefach-Längsrichtung erstreckende Führung geführt ist,
- einem am ersten Hebelarm befestigten zweiten Hebelarm, der sich von dem unteren Ende des ersten Hebelarms aus in Richtung des Bereichs der Öffnung zu einem vorderen Ende erstreckt, wobei das vordere Ende des jeweiligen zweiten Hebelarms gelegen ist, wobei an den vorderen Enden des jeweiligen zweiten Hebelarms die Abdeckung unter Ausbildung einer Drehachse angelenkt ist.

Nach einem weiteren Aspekt der Erfindung ist eine Ablagefach-Vorrichtung vorgesehen, aufweisend:
- ein Gehäuse mit einer unteren Bodenwand, einer oberen Deckwand, die der unteren Bodenwand gegenüber liegt, einer die untere Bodenwand und die obere Deckwand verbindende hintere Rückwand und einer ersten und einer zweiten Seitenwand, die jeweils auf einander gegenüber liegenden Seiten des Gehäuses die untere Bodenwand und die obere Deckwand und die hintere Rückwand verbindet, so dass das Gehäuse eine Öffnung in einem vorderen Bereich desselben freigibt,
- eine Vorrichtung zum Abdecken eines Ablagefachs nach einem der vorstehenden Ausführungsformen.

Dadurch, dass die Abdeckung aus ihrer Schließposition mittels wenigstens einer Führung zur Bildung der Ablagefläche zunächst in eine horizontale Ablageposition und anschließend optional in eine Verstau-Position verfahrbar ist, wobei das Ablagefach in der Ablagestellung und in der Verstau-Position zumindest teilweise geöffnet ist, ergibt sich gegenüber der eingangs genannten, nur über eine einfache Scharnierachse klappbaren Abdeckung der Vorteil, dass das Ablagefach durch die zusätzliche Verstau-Position auch vollständig freilegbar ist, ohne dass sich die Abdeckung dabei in den Fahrzeug-Innenraum erstreckt. Außerdem kann die Ablagefläche durch eine Anordnung auf Höhe des oberen Bereichs des Ablagefachs höher angeordnet werden als bei der typischen scharnierförmigen Verbindung nahe der Unterkante der Abdeckung, was für die Platzierung von Gegenständen, wie beispielsweise eines Notebooks, eines Tablet-PCs, eines Smartphones, eines Bildschirms oder einer Tastatur oder einer anderen Eingabevorrichtung sehr nützlich sein kann.

Die Abdeckung ist vorzugsweise mit wenigstens einem Führungsglied versehen, das in der wenigstens einen Führung verschiebbar geführt ist. Die Führungen werden bevorzugt von einer im Wesentlichen vertikalen Führung und von einer im Wesentlichen horizontalen Führung gebildet. Die im Wesentlichen vertikale Führung weist bevorzugt wenigstens eine Durchtrittsöffnung auf, über die sie zumindest phasenweise mit der im wesentlichen vertikalen Führung in Verbindung steht, so dass das bevorzugt nahe des unteren Endes der Abdeckung angeordnete Führungsglied zum Erreichen der horizontalen Ablageposition und zum Verschieben in die horizontale Verstau-Position von der im Wesentlichen vertikalen Führung in die im Wesentlichen horizontale Führung durchtreten kann.

Gemäß einer ersten Variante weist die im Wesentlichen horizontale Führung bevorzugt wenigstens eine Führungsleiste auf, an der die Abdeckung bevorzugt mit ihrem oberen Ende schwenkbar angelenkt ist. Die Führungsleiste ist ihrerseits bevorzugt in einer von mehreren Rollen gebildeten Führung oder optional in einer teleskopischen Gleitführung verschiebbar gelagert. Die im Wesentlichen horizontale Führung ist dabei besonders bevorzugt im oberen Bereich des Ablagefaches angeordnet.

Gemäß einer alternativen Ausführungsform wird die horizontale Führung von wenigstens einem Führungshebel übernommen, der mit Führungsgliedern in zwei voneinander beabstandeten im Wesentlichen horizontalen Führungen verschiebbar geführt ist.

Gemäß einer besonders vorteilhaften Ausgestaltung wird die Abdeckung in der Verstau-Position zumindest zum überwiegenden Teil vom Ablagefach aufgenommen. Besonders bevorzugt ist dabei eine vollständige Aufnahme der Abdeckung, so dass das Ablagefach in der Verstau-Position vollkommen ungehindert zugänglich ist.

Gemäß einer vorteilhaften Weiterbildung weist die im Wesentlichen horizontale Führung zumindest eine Rastmulde auf, die zur Aufnahme des Führungsgliedes in der Ablageposition oder in der Verstau-Position dient. Zur selbsthemmenden Arretierung des Führungsgliedes in diesen Positionen ist weiterhin bevorzugt jeder Rastmulde ein Federelement oder ein elastisch nachgiebiges Element zugeordnet, das das Führungsglied unter leichtem Druck in die Rastmulde drückt und dort so lange festhält, bis dieser Druck von einer Betätigungskraft überwunden wird.

Die Ausführungen zu einem der Aspekte der Erfindung, insbesondere zu einzelnen Merkmalen dieses Aspektes, gelten entsprechend auch analog für die anderen Aspekte der Erfindung. Wenn in dieser Anmeldung von "im Wesentlichen vertikal" gesprochen wird, bezieht sich dies auch auf die in den Figuren beispielhaft dargestellte Anordnung, bei der die Führungen entsprechend der Kontur des Armaturenbrett in diesem Bereich auch eine Schrägstellung aufweisen können. Ebenso soll die verwendete Bezeichnung "im Wesentlichen horizontal" auch Schrägstellungen umfassen. Derartige Bezeichnungen sollen daher für den Fachmann erkennbar nicht den Schutzbereich des Patents beschränken.

Im Folgenden werden Ausführungsformen und Ausführungsbeispiele der Erfindung beispielhaft anhand der beigefügten Zeichnungen näher erläutert werden. Die daraus hervorgehenden einzelnen Merkmale sind jedoch nicht auf die einzelnen Ausführungsformen und Ausführungsbeispiele beschränkt, sondern können mit weiter oben beschriebenen einzelnen Merkmalen und/oder mit einzelnen Merkmalen anderer Ausführungsformen und Ausführungsbeispiele verbunden werden. Die Einzelheiten in den Zeichnungen sind nur erläuternd, nicht aber beschränkend auszulegen. Die in den Ansprüchen enthaltenen Bezugszeichen sollen den Schutzbereich der Erfindung in keiner Weise beschränken, sondern verweisen lediglich auf die in den Zeichnungen gezeigten Ausführungsformen. Die Zeichnungen zeigen in:
Figur 1 eine schematische Seitenschnitt-Darstellung entlang der Referenz-Längsrichtung entlang der Schnittlinie S1-S1 der Figur 5 einer Ausführungsform einer Ablagefach-Vorrichtung mit einem Ablagefach und einer Ausführungsform einer Deckplatten-Verstellvorrichtung mit einer Deckplatte, wobei sich diese in der Schließstellung befindet, bei der ein Öffnungsbereich des Ablagefachs abgedeckt wird, insbesondere um das Ablagefach zu verschließen;
Figur 2 die Ausführungsform einer Ablagefach-Vorrichtung nach der Figur 1 in der Darstellung derselben, wobei sich die Deckplatte in einer teilweise geöffneten Stellung befindet;
Figur 3 die Ausführungsform einer Ablagefach-Vorrichtung nach der Figur 1 in derDarstellung derselben, wobei sich die Deckplatte in einer maximalen Auszugsstellung bei vollständig geöffnetem Öffnungsbereich des Ablagefachs mit der Bereitstellung einer Ablagefläche auf deren Innenseite befindet;
Figur 4 die Ausführungsform einer Ablagefach-Vorrichtung nach der Figur 1 in der Darstellung derselben, wobei sich die Deckplatte in der Verstau-Position bei geöffnetem Öffnungsbereich des Ablagefachs befindet;
Figur 5 eine schematische Schnitt-Darstellung in der Draufsicht auf die Ausführungsform der Ablagefach-Vorrichtung nach der Figur 1 in der Stellung der Deckplatte der Figur 2;
Figur 6 eine schematische dreidimensionale Darstellung der Ablagefach-Vorrichtung nach der Figur 1 in der Stellung der Deckplatte der Figur 1;
Figur 7 eine schematische dreidimensionale Darstellung der Ablagefach-Vorrichtung nach der Figur 1 in der Stellung der Deckplatte der Figur 2;
Figur 8 eine schematische dreidimensionale Darstellung der Ablagefach-Vorrichtung nach der Figur 1 in der Stellung der Deckplatte der Figur 3;
Figur 9 eine schematische dreidimensionale Darstellung der Ablagefach-Vorrichtung nach der Figur 1 in der Stellung der Deckplatte der Figur 4;
Figur 10 eine schematische Seitenschnitt-Darstellung entlang der Referenz-Längsrichtung durch eine weitere Ausführungsform einer Ablagefach-Vorrichtung mit einem Ablagefach und einer Ausführungsform einer Deckplatten-Verstellvorrichtung mit einer Deckplatte, wobei sich diese in der Schließstellung befindet, bei der ein Öffnungsbereich des Ablagefachs abgedeckt wird, insbesondere um das Ablagefach zu verschließen;
Figur 11 eine schematische vergrößerte Darstellung des in Figur 10 mit der Bezeichnung "XI" markierten Übergangsbereichs der vertikalen und der horizontalen Führung der Abdeckung;
Figur 12 die Ausführungsform einer Ablagefach-Vorrichtung nach der Figur 11 in der Darstellung derselben, wobei sich die Deckplatte in einer teilweise geöffneten Stellung befindet;
Figur 13 die Ausführungsform einer Ablagefach-Vorrichtung nach der Figur 11 in der Darstellung derselben, wobei sich die Deckplatte in einer maximalen Auszugsstellung bei vollständig geöffnetem Öffnungsbereich des Ablagefachs mit der Bereitstellung einer Ablagefläche auf deren Innenseite befindet;
Figur 14 die Ausführungsform einer Ablagefach-Vorrichtung nach der Figur 11 in der Darstellung derselben, wobei sich die Deckplatte in der Verstau-Position bei geöffnetem Öffnungsbereich des Ablagefachs befindet;
Figur 15 eine schematische dreidimensionale Teildarstellung der Ablagefach-Vorrichtung nach der Figur 11 in der Stellung der Deckplatte der Figur 11;
Figur 16 eine schematische dreidimensionale Teildarstellung der Ablagefach-Vorrichtung nach der Figur 11 in der Stellung der Deckplatte der Figur 13;
Figur 17 eine weitere Ausführungsform der Ablagefach-Vorrichtung in der Stellung der Deckplatte der Figur 11.

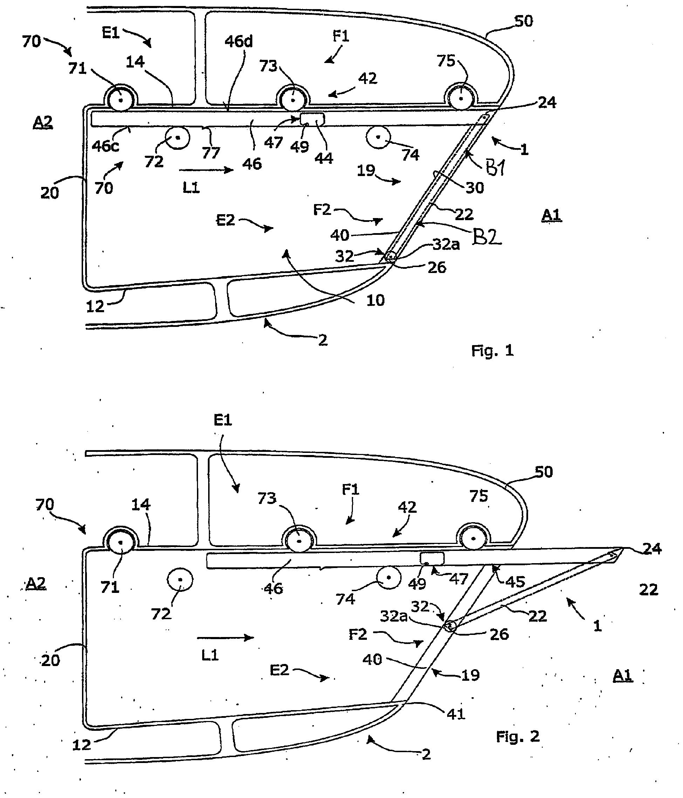

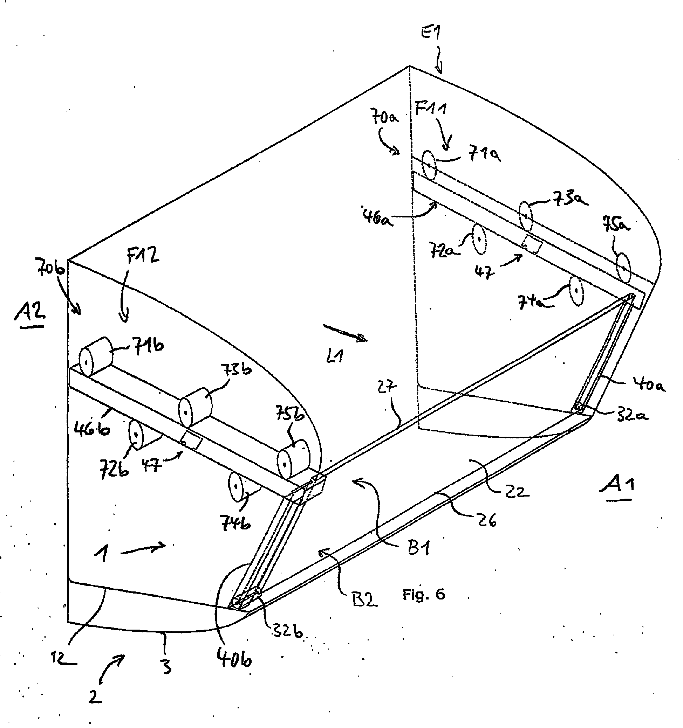

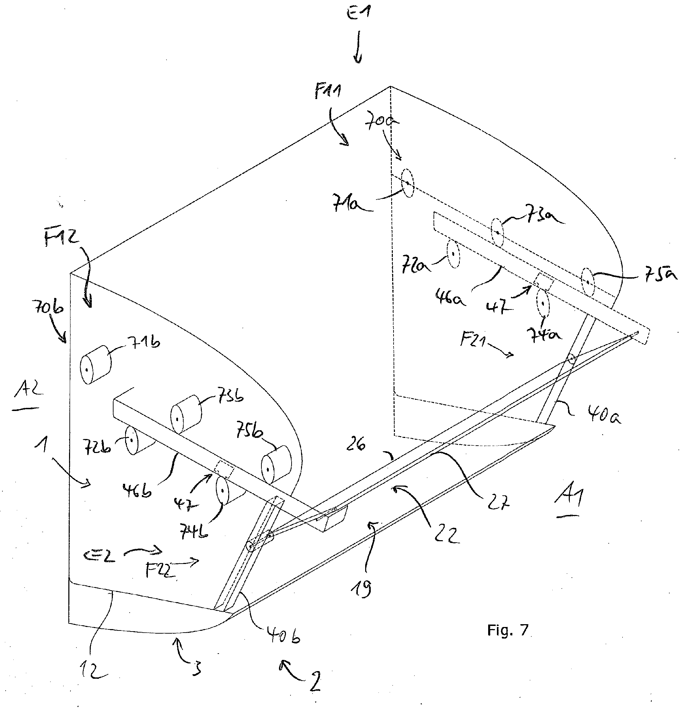

In den Figuren 1 bis 10 ist eine erste Ausführungsform einer Ablagefach-Vorrichtung 2 mit einer Deckplatten-Verstellvorrichtung 1 oder Vorrichtung zur Abdeckung eines Ablagefaches 10 dargestellt. Das Ablagefach 10 ist an einer Tragkonstruktion 3 im Innenraum eines Kraftfahrzeugs angebracht oder ist mit dieser integriert und kann insbesondere als Handschuhfach ausgeführt sein, das an einem Armaturenbrett 50 angeordnet oder an diesem befestigt ist. Das Ablagefach 10 wird begrenzt von einer unteren Bodenwand 12, optional einer oberen Deckwand 14, einer linken Seitenwand 16, einer rechten Seitenwand 18, einer Rückwand 20 und einer vorderen Abdeckung oder einer Abdeckung oder Abdeckplatte 22. Zwischen den Seitenwänden 16, 18 und der Rückwand 20 gegenüber liegend ist an einer Vorderseite A1 ein Öffnungsbereich 19 ausgebildet, der von der Deckplatte 22 in ihrem Schließzustand abgedeckt ist. Daraus ist eine von einer Rückseite A2, an der die Rückwand 20 gelegen ist, zu der Vorderseite A1 gerichtete Längsrichtung L1 der Deckplatten-Verstellvorrichtung 1 definiert.

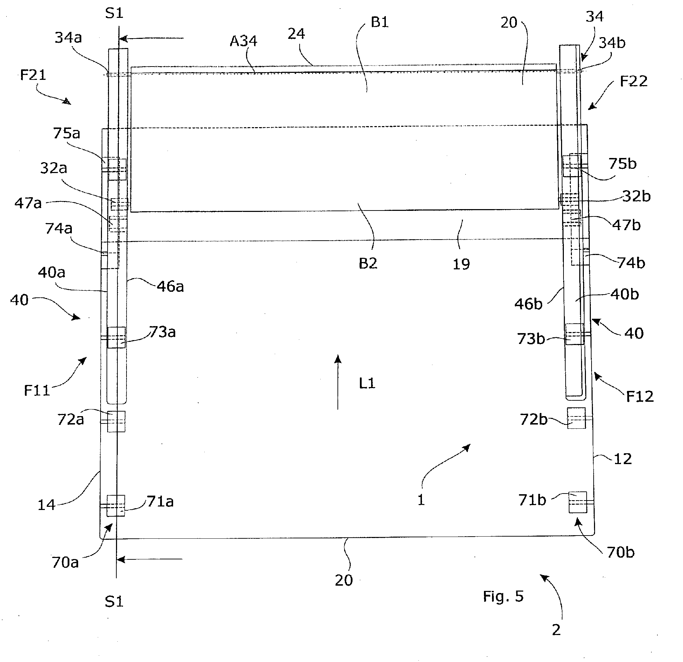

Die in den Figuren 1 bis 9 gezeigte Ausführungsform der Deckplatten-Verstellvorrichtung 1 weist eine erste Führungsvorrichtung F1 und eine zweite Führungsvorrichtung F2 auf. Die erste Führungsvorrichtung F1 ist bei der dargestellten Ausführungsform im Bereich der Seitenwände 16 bzw. 18 des Ablagefaches 10 als obere, im Wesentlichen horizontale Führungen 42 und die zweite Führungsvorrichtung F2 als nahe der Vorderkante der Seitenwände 16 bzw. 18 verlaufende, im Wesentlichen vertikale Führungen 40 realisiert. In der Figur 5 sind die oberen Führungen 42 mit den Bezugzeichen 42a bzw. 42b und die vertikalen Führungen mit den Bezugzeichen 40a bzw. 40b bezeichnet.

Zur Bewegung der Deckplatte 22 zum Öffnen und Schließen des Öffnungsbereichs 19 ist eine erste Führungs-Anordnung E1 mit einer ersten Führungsvorrichtung F1 und eine zweite Führungs-Anordnung E2 mit einer zweiten Führungsvorrichtung F2 vorgesehen.

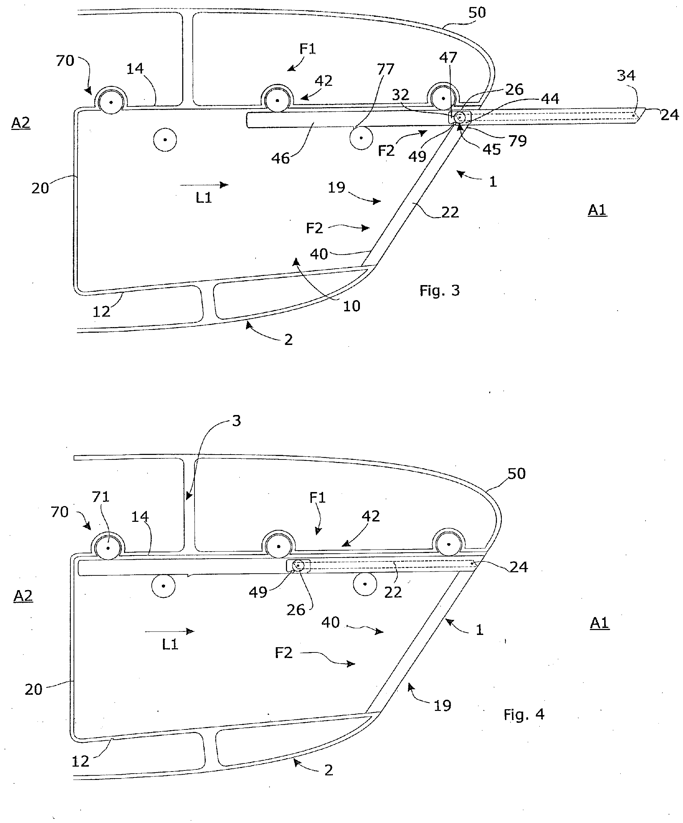

Bei den Ausführungsformen nach den Figuren 1 bis 9 ist die erste Führungs-Anordnung E1 aus zumindest einer am Ablagefach oder einer Befestigungsvorrichtung derselben angeordneten Führungsaufnahme oder Führungsbahn 70 und der mit dieser gekoppelten ersten Führungsvorrichtung F1 der Deckplatten-Verstellvorrichtung 1 gebildet, die durch eine in der Führungsaufnahme oder Führungsbahn 70 zwischen einer eingefahrenen Stellung (Figur 1) und einer ausgefahrenen Stellung (Figur 3) bewegbar geführte Führungsleiste oder Führungsplatte 46 gebildet ist. Im Folgenden wird hauptsächlich von einer Führungsleiste 46 ausgegangen. Die Führungsaufnahme oder Führungsbahn 70 kann wie dargestellt an dem Ablagefach 10 oder einer Befestigungsvorrichtung derselben wie insbesondere der Tragstruktur 3 angeordnet sein. Alternativ kann die Führungsaufnahme oder Führungsbahn 70 auch Bestandteil der Führungsvorrichtung F1 der Deckplatten-Verstellvorrichtung 1 sein. Die Führungsaufnahme oder Führungsbahn 70 ist bei der dargestellten Ausführungsform aus fünf Führungsrollen 71, 72, 73, 74, 75 gebildet, die entlang der Längsrichtung L1 gesehen einen Bewegungsraum freigeben, in der die an zumindest einem Teil der fünf Führungsrollen 71, 72, 73, 74, 75 anliegende Führungsleiste 46 bewegbar ist. Dabei sind obere Führungsrollen 71, 73, 75 zur Anlage an eine obere Anlagefläche der Führungsleiste 46 und untere Führungsrollen 72, 74 zur Anlage an eine untere Anlagefläche der Führungsleiste 46 vorgesehen. Bei einer Variante dieser Ausführungsform kann auch eine andere Anzahl von fünf Führungsrollen vorgesehen sein. Bei einer weiteren Variante kann statt der Führungsrollen eine obere Anlageschiene zur Anlage an die obere Anlagefläche der Führungsleiste 46 und eine untere Anlageschiene zur Anlage an die untere Anlagefläche der Führungsleiste 46 vorgesehen sein. Dabei kann auch statt der oberen Anlagefläche oder der unteren Anlageschiene eine Mehrzahl von Führungsrollen vorgesehen sein. Die erste Führungsvorrichtung F1 weist weiterhin eine Gelenkvorrichtung 34 auf, mit der die Deckplatte 22 unter Ausbildung einer Gelenkachse 34 gelenkig an die Führungsleiste 46 angelenkt ist. Vorzugsweise ist die Gelenkvorrichtung 34 bzw. die Gelenkachse 34 an der Oberkante 24 oder innerhalb des hierin bezeichneten oberen Bereichs B1 der Deckplatte 22 angeordnet.

Die erste Führungs-Anordnung E1 kann, wie voranstehend beschrieben, eine Führungsaufnahme oder Führungsbahn 70 und die mit dieser gekoppelte erste Führungsvorrichtung F1 zur Bewegung der Deckplatte 22 aufweisen. Bei der Ausführungsform der Ablagefach-Vorrichtung 2 nach den Figuren 1 bis 9 ist die erste Führungsvorrichtung F1 aus zwei Teilführungs-Vorrichtungen F11, F22 und einer von diesen jeweils aufgenommenen Führungsaufnahmen oder Führungsbahnen 70a bzw. 70b gebildet, die jeweils fünf Führungsrollen 71a bzw. 71b, 72a bzw. 72b, 73a bzw. 73b, 74a bzw. 74b, 75a bzw. 75b und dabei obere Führungsrollen 71a bzw. 71b, 73a bzw. 73b, 75b bzw. 75b zur Anlage an eine obere Anlagefläche der Führungsleiste 46 und untere Führungsrollen 72a bzw. 72b, 74a bzw. 74b zur Anlage an eine untere Anlagefläche der Führungsleiste 46 aufweist (Figur 5). Die zwei Teilführungs-Vorrichtungen F11, F12 sind dabei derart angeordnet, dass die Deckplatte 22 in der Draufsicht auf die Deckplatten-Verstellvorrichtung 1 oder in der Längsrichtung L1 gesehen zwischen diesen gelegen ist.

Bei den Ausführungsformen nach den Figuren 1 bis 9 weist die zweite Führungsvorrichtung F2 insbesondere die Führungsleiste oder Führungsplatte 46, eine Führungsbahn 40, ein darin oder daran geführtes Führungsglied oder Führungsteil wie ein Führungselement 32 auf. Die Führungsbahn 40 ist an der Tragkonstruktion 3 oder das Ablagefach 10 an der Vorderseite S1 des Ablagefachs 10 oder einer Befestigungsvorrichtung der Tragkonstruktion 3 befestigt oder lagefest, also gegenüber dieser bzw. diesem unbewegbar angekoppelt. Die Führungsbahn 40 erstreckt sich von einem unteren Randbereich 41 der Tragkonstruktion 3 oder des Ablagefachs 10 an der Vorderseite S1 des Ablagefachs 10 oder einer Befestigungsvorrichtung der Tragkonstruktion 3, wobei der untere Randbereich 41 einen unteren Begrenzungsabschnitt des Öffnungsbereichs 19 bildet. Das Führungsglied oder Führungselement 32 ist an der Deckplatte 22 angeordnet und derart gestaltet, dass dieses entlang der Erstreckung der Führungsbahn 40 entlang der Längsrichtung L1 von dieser oder an dieser geführt wird. Das Führungsteil 32 ist an einer Stelle der Deckplatte 22 angeordnet, die bei ausgefahrener Stellung der Deckplatte 22 in der Längsrichtung L1 gesehen beabstandet liegt von der Stelle, an der die Gelenkvorrichtung 34 bzw. die Gelenkachse 34 angeordnet ist. Der Abstand in der Erstreckung der Deckplatte 22 kann insbesondere zumindest ein Viertel der Länge der Erstreckung der Deckplatte 22 entlang der Längsrichtung L1 betragen. Vorzugsweise ist das Führungsteil 32 an der Unterkante 26 oder dem hierin bezeichneten "unteren" Bereich der Deckplatte 22 gelegen. Das Führungsteil 32 kann rollenförmig oder kugelförmig ausgeführt sein und drehfest an der Deckplatte 22 befestigt oder drehbar an der Deckplatte 22 gelagert sein. Die Führungsbahn 40 kann als Hohlprofil derart ausgeführt sein, dass das Führungsteil 32 innerhalb des Hohlprofils entlang der Längserstreckung der Führungsbahn 40 bewegbar geführt ist. Das Führungsteil 32 kann auch als Paar von rollenförmigen oder kugelförmigen Führungselementen ausgeführt sein, zwischen denen die Führungsbahn 40 gehalten ist, so dass das Führungsteil 32 entlang der Längserstreckung der Führungsbahn 40 an diesem bewegbar geführt ist.

Die Ausführungsformen die Vorrichtung eine erste Führungsvorrichtung F1 und eine zweite Führungsvorrichtung F2 aufweist, wobei die erste Führungsvorrichtung F1 einen oberen Bereich B1 der Deckplatte 22 bewegbar an das Ablagefach 10 oder einer Befestigungsvorrichtung derselben und die zweite Führungsvorrichtung F2 einen unteren Bereich B2 der Deckplatte 22 bewegbar an das Ablagefach 10 oder einer Befestigungsvorrichtung derselben koppelt.

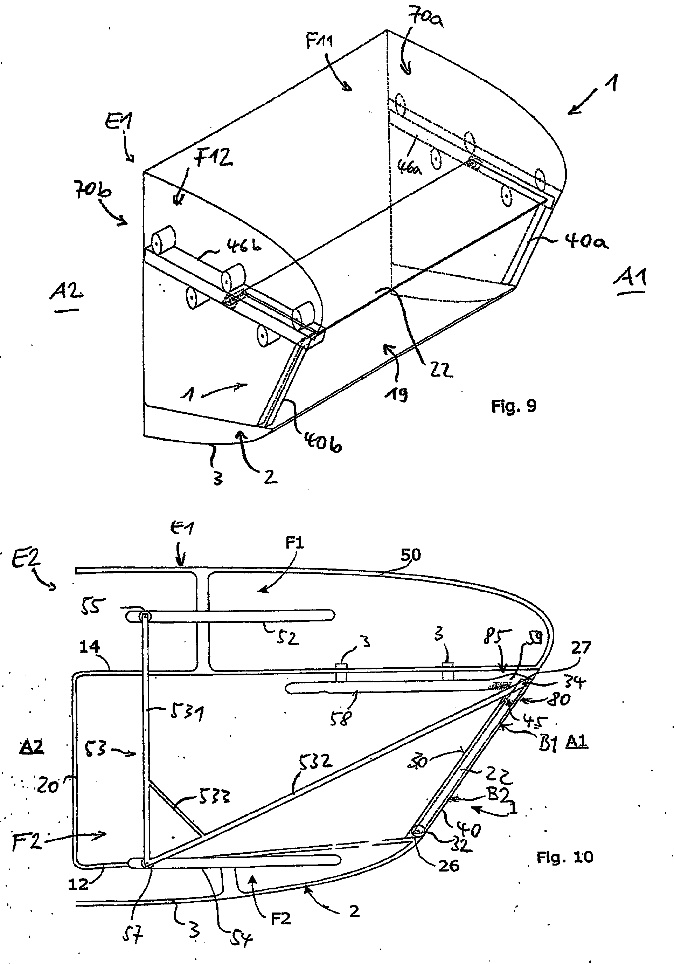

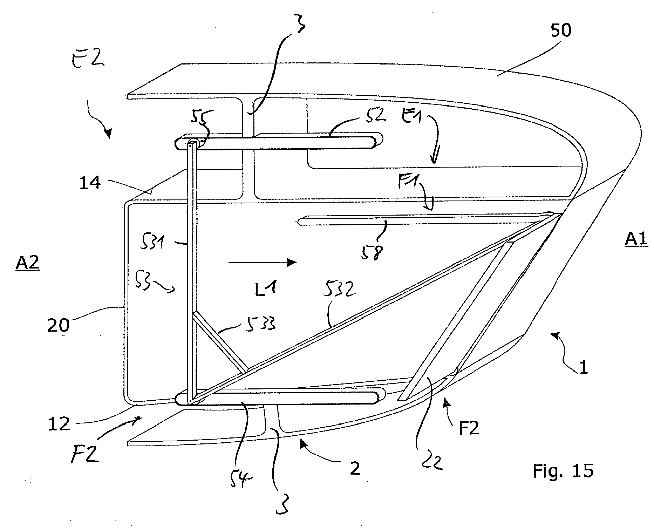

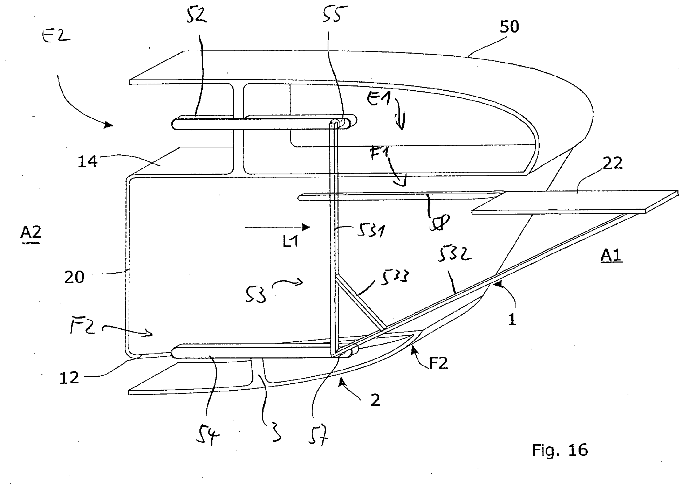

Die zweite Führungs-Anordnung E2 kann, wie voranstehend beschrieben, eine Führungsbahn 40, die Teil des Ablagefachs 10 oder der Befestigungsvorrichtung derselben oder Teil der zweiten Führungsvorrichtung F2 sein kann, und ein mit dieser gekoppeltes Führungsteil 32 aufweisen. Bei der in den Figuren 1 bis 9 konkret dargestellten Ausführungsform der Ablagefach-Vorrichtung 2 ist die zweite Führungsvorrichtung F2 aus zwei Teilführungs-Vorrichtungen F21, F22 jeweils mit einer Führungsbahn 40 und einem Führungsteil 32 gebildet (Figur 5). Die zwei Teilführungs-Vorrichtungen F21, F22 sind dabei derart angeordnet, dass die Deckplatte 22 in der Draufsicht auf die Deckplatten-Verstellvorrichtung 1 oder in der Längsrichtung L1 gesehen zwischen diesen gelegen ist. Dieses kann in analoger Weise auch bei der Ausführungsformen nach den Figuren 10 bis 17 vorgesehen sein.

Somit weist die Vorrichtung 1 zum Abdecken des Öffnungsbereichs 19 die Deckplatte 22, die erste Führungsvorrichtung F1 und die zweite Führungsvorrichtung F2 auf, wobei insbesondere die erste Führungsvorrichtung F1 einen oberen Bereich B1 der Deckplatte 22 bewegbar an das Ablagefach 10 oder an eine Befestigungsvorrichtung derselben oder die Tragvorrichtung 3 und die zweite Führungsvorrichtung F2 einen unteren Bereich B2 der Deckplatte 22 bewegbar an das Ablagefach 10 oder an eine Befestigungsvorrichtung derselben oder die Tragvorrichtung 3 koppelt. Dabei sind die erste Führungsvorrichtung F1 und die zweite Führungsvorrichtung F2 insbesondere derart ausgeführt, dass die Abdeckplatte 22 aus ihrer Schließposition mittels wenigstens einer Deckplatten-Führung 40, 42 zur Bildung der Ablagefläche in eine horizontale Ablageposition oder dass die Abdeckplatte 22 in eine Verstaustellung oder Verstau-Position verfahrbar ist, wobei die Abdeckplatte 22 den Öffnungsbereich 19 in der Ablagestellung und in der Verstau-Position ganz oder teilweise freigibt.

Bei der in den Figuren 1 bis 9 konkret dargestellten Ausführungsform der Ablagefach-Vorrichtung 2 weist die Deckplatte 22 eine Außenseite oder äußere Oberfläche 28 und eine Innenseite oder innere Oberfläche 30 sowie einen in Bezug auf die Schwerkraftrichtung unteren Rand oder eine Unterkante 26 und eine entgegen gesetzt zum unteren Rand 26 gelegenen oberen Rand oder eine Oberkante 24 auf. Die Deckplatte 22 ist nahe ihrer Unterkante 26 zu beiden Seiten mit jeweils einem Führungsglied 32 versehen. Die Führungsglieder 32, die in den Figuren auch einzeln mit den Bezugszeichen 32a und 32b bezeichnet, sind in den im Wesentlichen vertikalen Führungen 40 verschiebbar gelagert.

Die Deckplatte 22 ist nahe ihrer Oberkante 24 zu beiden Seiten mittels einer Drehachse 34 an einer Führungsleiste 46 bzw. 46a, 46b schwenkbar angelenkt, die in der im Wesentlichen horizontalen Führung 42 verschiebbar gelagert ist. Die Führungsleisten 46 sind durch mehrere Führungsrollen 71, 72, 73, 74, 75 verschiebbar geführt, so dass sie vollständig im Ablagefach 10 versenkbar oder aus diesem soweit herausziehbar sind, dass die Drehachse 34 so weit in Richtung zum Fahrzeuginnenraum herausgeführt wird, dass die Deckplatte 22 ihre nahezu horizontale Ablageposition gemäß Figur 3 erreichen kann.

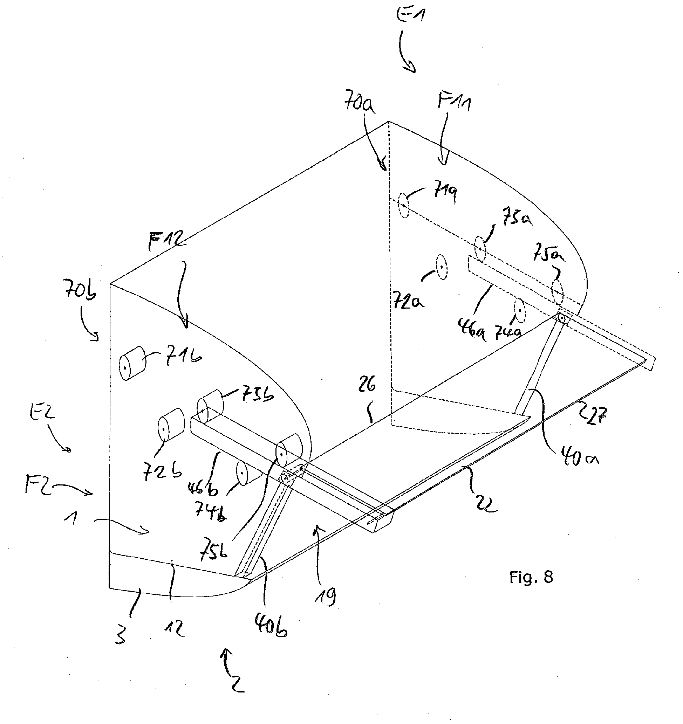

Die Führungsleiste 46 bzw. 46a, 46b ist mit einem Aufnahmeprofil - dargestellt als Hohlprofil - ausgeführt. Die Führungsbahn 40 bzw. 40a, 40b weist an einem oberen Ende 41 eine Öffnung 45 auf, die derart gelegen und ausgebildet ist, dass eine Durchtrittsöffnung 44 der Führungsleiste 46 bzw. 46a, 46b bei einer bestimmten Position der Führungsleiste 46 bzw. 46a, 46b in der Längsersteckung der jeweiligen Führungsbahn 40 bzw. 40a, 40b gesehen, unterhalb der Durchtrittsöffnung 44 gelegen ist (Figuren 3 und 8). In dieser Stellung steht das Innere der Führungsbahn 40 bzw. 40a, 40b mit dem Inneren der jeweiligen Führungsleiste 46 bzw. 46a, 46b in Verbindung. Somit kann das Führungsteil 32, das entlang der Längserstreckung der jeweiligen Führungsbahn 40 bzw. 40a, 40b an oder in dieser bewegbar geführt ist, von der jeweiligen Führungsbahn 40 bzw. 40a, 40b in das Innere der jeweils an die Führungsbahn 40 bzw. 40a, 40b angeschlossenen Führungsleiste 46 bzw. 46a, 46b eintreten und umgekehrt.

Die Abdeckung 22 wird dabei mit den Führungsgliedern 32 bzw. 32a, 32b aus der in den Figuren 1 und 5 dargestellten Schließposition über die in der Figur 2 dargestellte Teilöffnungsposition mit den Führungsgliedern 32 bzw. 32a, 32b in den Führungen 40 bzw. 40a, 40b nach oben geführt werden, wobei die Deckplatte 22 gleichzeitig von den Führungsleisten 46 bzw. 46a, 46b mittels der Verbindung über die Drehachsen 34 allmählich in eine im Wesentlichen horizontale Position überführt wird (Figuren 3 und 8). Am oberen Ende der Führungen 40 bzw. 40a, 40b angekommen, werden die Führungsglieder 32 bzw. 32a, 32b durch in den Führungsleisten 46 bzw. 46a, 46b ausgebildeten Durchtrittsöffnungen 44 in die horizontalen Führungen 42 überführt. Die Durchtrittsöffnungen 44 sind an den Unterseiten der horizontalen Führungen 42 bzw. der Führungsleisten 46 so angeordnet, dass sie beim Erreichen einer nahezu horizontalen Position der Deckplatte 22 in Überdeckung mit den Öffnungen 45 der oberen Enden 79 der Führungen 40 stehen.

In der in Figur 3 dargestellten Ablageposition dient die Innenseite 30 der Deckplatte 22 als zusätzliche Ablage, wobei die Führungsleisten 46 die Deckplatte 22 über einen Teil der Führungsrollen 71, 72, 73, 74, 75 weiterhin stabil abstützen. Um die Deckplatte 22 dabei auch horizontal in einer stabilen Position zu halten, können an der Unterseite der Führungsleisten 46 eine Rastvorrichtung und insbesondere eine Vertiefung oder Rastmulde 47 ausgebildet sein, in die das jeweilige Führungsglied 32 sich beim Erreichen der in Figur 3 dargestellten Ablageposition einlegen können. Durch zumindest ein zusätzliches elastisches Element oder Federelement 49, das in der Öffnung oder im Eintrittsbereich 47a gegenüber den Rastmulden 47 am unteren Bereich der Führungsleisten 46 angeordnet ist, wird das jeweilige Führungsteil 32 in einer in die jeweilige Führungsleiste 46 eingeführte Position gehalten, so dass dieses nur bei Aufbringung einer gewissen Betätigungskraft, die größer ist, als die normalen aus Beschleunigungs- und Bremskräften des Fahrzeugs resultierenden Kräfte, nach unten wieder aus den Rastmulden 47 heraus bewegt werden kann.

Die Führungsleisten 46 können oder zumindest eine Führungsleiste 46 kann an ihrer Unterseite 46c und/oder ihrer Oberseite 46d zumindest eine Rastvorrichtung 77 aufweisen, mit der eine Stellung der jeweiligen Führungsleisten 46 an der Führungsvorrichtung 70 und insbesondere eine der hierin definierten Stellungen, in stabiler Weise einstellbar ist, das die Führungsleiste 46 durch Aufbringung einer definierten äußeren Maximalkraft aus dieser jeweiligen Stellung herausbewegt werden kann.

Aus der in Figur 3 dargestellten Ablageposition kann die Abdeckung 22 in horizontaler Lage auch in eine Verstau-Position gemäß Figur 4 gefahren werden, bei der sie mit den Führungsleisten 46 bevorzugt vollständig vom Ablagefach 10 aufgenommen wird.

Für diese Verstau-Position können an der Unterseite der Führungsleisten 46 entsprechend zusätzliche Rastmulden 48 und an der Oberseite entsprechend zusätzliche Federelemente 49 vorgesehen sein. Die Deckplatte 22 kann optional aber auch gleichzeitig mit den Führungsleisten 46 in die Verstau-Position gemäß Figur 4 gefahren werden, so dass dieselben Rastmulden 48 wie für die Ablageposition gemäß Figur 3 auch hierbei wirksam sind. Zum Überfahren der Durchtrittsöffnungen 44 beim Verschieben der Deckplatte 22 von der Ablageposition gemäß Figur 3 in die Verstau-Position gemäß Figur 4 können diese optional durch nicht dargestellte verschiebbare Teile zumindest teilweise verschlossen werden. Im einfachsten Falle genügt hierfür jedoch auch ein leichter Druck von oben auf die in der horizontalen Position die Vorderkante der Deckplatte 22 bildende Oberkante 24 derselben.

Zum Zurückführen der Führungsglieder 32 aus den Führungsleisten 46 durch die Durchtrittsöffnungen 44 in die im Wesentlichen vertikalen Führungen 40 werden diese verschiebbaren Teile dann nach Art einer Weiche wieder auf die Seite geschoben oder geschwenkt. Im einfachsten Falle genügt hierfür auch ein leichter Druck von unten auf die in der horizontalen Position die Vorderkante der Deckplatte 22 bildende Oberkante 24 derselben.

Zu den vorgenannten Ausführungsformen alternative Ausführungsformen der Erfindung sind in den Figuren 10 bis 17 dargestellt. Dabei wurden alle Teile vergleichbarer Funktion mit denselben Bezugszeichen versehen wie im ersten Ausführungsbeispiel gemäß den Figuren 1 bis 9. Auch bei den Ausführungsformen der Figuren 10 bis 17 sind, wie oben beschrieben, zur Bewegung der Deckplatte 22 zum Öffnen und Schließen des Öffnungsbereichs 19 eine erste Führungs-Anordnung E1 mit einer ersten Führungsvorrichtung F1 und eine zweite Führungs-Anordnung E2 mit einer zweiten Führungsvorrichtung F2 vorgesehen.

Die erste Führungsvorrichtung F1 kann wie die erste Führungsvorrichtung F1 nach den Figuren 1 bis 9 ausgeführt sein. In der Figur 10 ist diese als Führungsbahn 58 realisiert, in die das Führungsglied 32 einführbar ist. Die Führungsbahn 58 ist bei diesen Ausführungsformen als optional anzusehen.

Die zweite Führungsvorrichtung F2 kann insbesondere wie an Hand der Ausführungsform nach den Figuren 1 bis 9 beschrieben ausgeführt sein, insbesondere aufweisend: die Führungsbahn 40, das an die Deckplatte 22 angeordnet Führungsteil 32. Anstelle der Führungsleiste oder Führungsplatte 46 weist die zweite Führungsvorrichtung F2 ein Stellteil auf, das als Führungshebel 53 realisiert ist.

Bei der Ausführungsform nach den Figuren 10 bis 16 weist die zweite Führungs-Anordnung E2 zwei Führungsbahnen 52, 54 auf, in denen der Führungshebel 53 geführt ist. Dadurch ist mit jeder Verschiebestellung des Führungshebels 53 auch dessen Lage relativ um Ablagefach 10 eindeutig bestimmt.

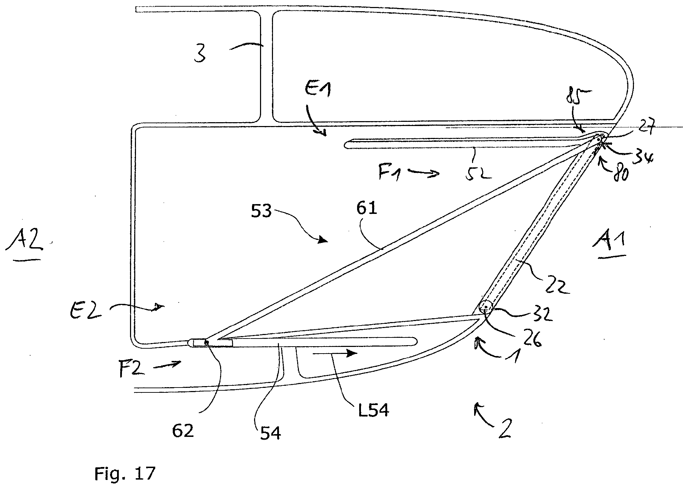

Bei der Ausführungsform nach der Figur 17 weist die zweite Führungs-Anordnung E2 eine Führungsbahn 54 auf, in denen der Führungshebel 53 geführt ist, wobei durch die bewegungsfeste Verbindung des Hebelarms 61 und des Führungsteils 62 mit jeder Verschiebestellung des Führungshebels 53 auch dessen Lage relativ um Ablagefach 10 eindeutig bestimmt ist.

Anstelle mit Führungsleisten 46 ist die Deckplatte 22 in der zweiten Ausführungsform gemäß den Figuren 10 bis 17 mit den nahe ihrer Oberkante 24 angeordneten Drehachsen 34 zu beiden Seiten jeweils an einem insgesamt mit 53 bezeichneten Führungshebel angelenkt.

Die beiden Führungshebel 53 werden jeweils von einem im Wesentlichen vertikalen Hebelarm 531 und einem mit diesem über einen Verbindungslenker 533 starr verbundenen, schräg nach vorne ansteigenden Hebelarm 532 gebildet.

An seinem oberen Ende ist jeder vertikale Hebelarm 531 mit einem oberen Führungsglied 55 verbunden. Die oberen Führungsglieder 55 werden in zwei zu beiden Seiten des Ablagefachs 10 angeordneten, im Wesentlichen horizontalen oberen Führungen 52 verschiebbar geführt.

An seinem unteren Ende ist jeder vertikale Hebelarm 531 mit einem unteren Führungsglied 57 verbunden. Die unteren Führungsglieder 57 werden in zwei zu beiden Seiten des Ablagefachs 10 angeordneten, im Wesentlichen horizontalen unteren Führungen 54 verschiebbar geführt.

Am oberen Ende der schräg nach vorne ansteigenden Hebelarme 532 sind diese über die Drehachsen 34 schwenkbar mit der Deckplatte 22 verbunden.

Das untere Ende der Deckplatte 22 ist analog zum ersten Ausführungsbeispiel gemäß den Figuren 1 bis 7 zu beiden Seiten mit jeweils einem Führungsglied 32 versehen oder verbunden. Die Führungsglieder 32 sind z.B. in einer nahe der Vorderkante des Ablagefachs 10 zu beiden Seiten an oder nahe der Seitenwände 16 angeordneten, im Wesentlichen vertikalen Führungen 40 verschiebbar geführt.

Bei einer Ausführungsform nach den Figuren 10 bis 16 sind zwei sich in der Ablagefach-Längsrichtung erstreckende seitliche Führungsteile jeweils in Form eines Führungshebels 53 realisiert, der derart an die jeweilige seitliche Führung 43; 52 des Ablagefachs 10 ankoppelbar ist, dass dieser translatorische Bewegungen entlang der Ablagefach-Längsrichtung ausführt, so dass die Abdeckung 22 mit den zwei Führungshebeln 53 verbunden ist, der an zwei zueinander parallelen Führungen 52, 54 verschiebbar geführt ist, wobei an den vorderen Enden der Führungshebel 53 die Abdeckung 22 unter Ausbildung einer Drehachse 34 angelenkt ist.

Das Innere der Führungsbahn 40 ist mit dem Inneren der Führungsbahn 58 verbunden, das die Führungsbahn 40 über eine Öffnung 45 an ihrem oberen Ende in eine Öffnung 59 der Führungsbahn 58 einmündet, so dass das Führungsteil 32 von der Führungsbahn 40 in die Führungsbahn 58 eingeführt werden kann und umgekehrt.

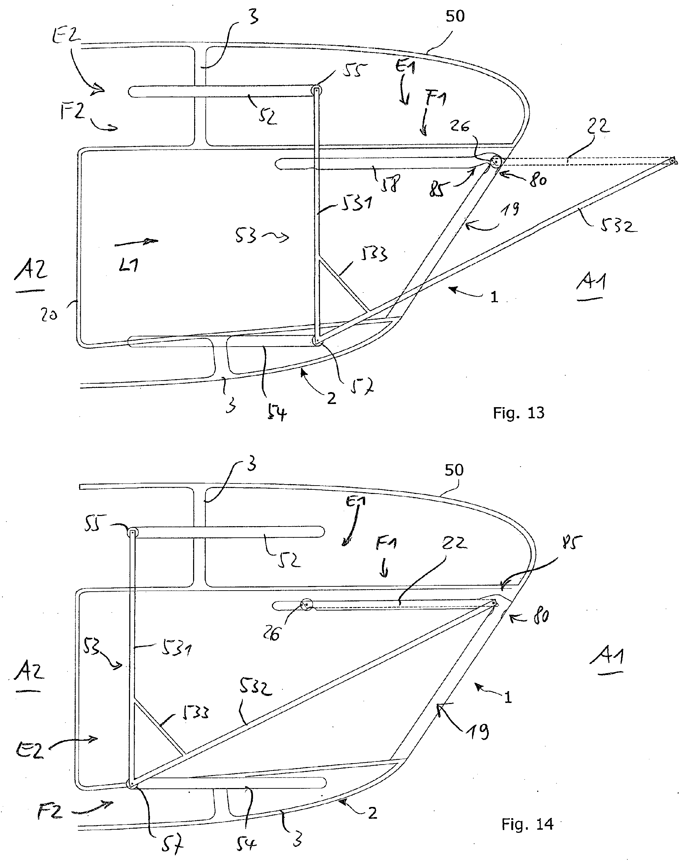

Am oberen Ende der Führungsbahn 40 und insbesondere in ihrem Inneren kann eine Rastvorrichtung 80 ausgebildet sein. Dies kann durch eine Verengung insbesondere durch das Vorsehen von zumindest einer elastischen Auflage auf der Innenfläche der Führungsbahn 40 zur Verengung des Innenquerschnitts derselben realisiert sein. Dabei ist die Rastvorrichtung 80 derart vorgesehen, dass das Führungsteil 32 im Zustand der Figur 13 in eine stabile Ruhestellung gehalten wird. Auch kann eine Rastvorrichtung 85 an dem Ende der Führungsbahn 58 ausgebildet sein, das an dem oberen Ende der Führungsbahn 40 anliegt. Die Rastvorrichtung 85 kann als Krümmung der Führungsbahn 58 derart ausgebildet sein, dass von der stabilen Ruhestellung des Führungsteil 32 gemäß Figur 13 das Führungsteil 32 zur Rückwand 20 hin einen kurzen Anstieg bewegt werden muss, der somit zur Stabilisierung des Führungsteil 32 in seiner "stabilen Ruhestellung" beiträgt. Auch kann die Rastvorrichtung 85 wie die Rastvorrichtung 80 ausgebildet sein.

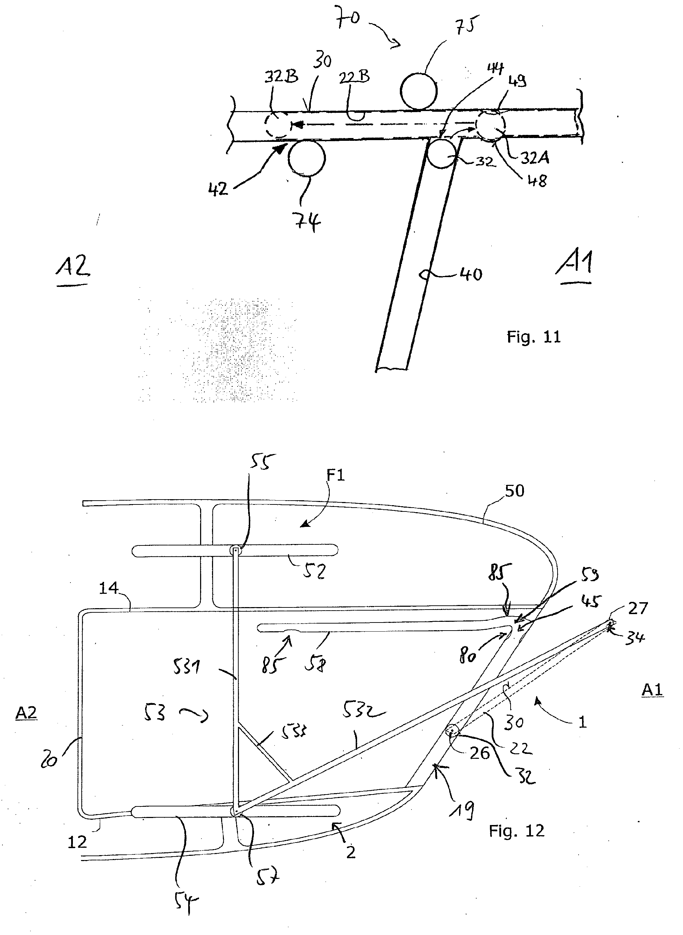

Im oberen Teil des Ablagefachs 10 ist optional zu beiden Seiten noch eine zusätzliche horizontale Führung 58 vorgesehen, die in gleicher Weise, wie die in Figur 10 dargestellte horizontale Führung 42 über eine Durchtrittsöffnung 44 mit der im Wesentlichen vertikalen Führung 40 verbunden ist, so dass die Führungsglieder 32 der Deckplatte 22 nach Erreichen einer im Wesentlichen horizontalen Ablageposition gemäß Figur 12 von der vertikalen Führung 40 in die horizontale Führung 58 übertreten kann. Längs der Führungen 58 kann die Deckplatte 22 von der Ablageposition gemäß Figur 10 auch in die in Figur 13 dargestellte Verstau-Position verschoben werden, in der das Ablagefach 10 nach vorne freigelegt ist, ohne dass die Deckplatte 22 dabei in den Fahrzeuginnenraum ragt.

Zum Öffnen der Abdeckung wird der Führungshebel 53 mit den Führungsgliedern 55 und 57 längs der Führungen 52 und 54 nach vorne geführt. Dabei führen der linear nach vorne fahrende schräge Hebelarm 532 und das gleichzeitig in der Führung 40 nach oben gleitende Führungsglied 32 die Abdeckung 22 aus der in der Figur 11 gezeigten Schließposition über die in der Figur 12 gezeigte Teilöffnungsposition in die horizontale Ablageposition gemäß der Figur 13. Der Antrieb kann manuell durch die Handkraft eines Benutzers über einen an der Abdeckung angeordneten Handgriff oder eine Griffmulde erfolgen, so dass alle Führungselemente (Hebelarm 53, Führungen 40 und 58) nur passiv zur Führung der Abdeckung dienen. Der Antrieb kann jedoch auch in einer komfortableren Variante mittels eines nicht dargestellten vorzugsweise elektrischen Antriebs erfolgen. Dieser Antrieb steuert dann vorzugsweise auch eine nicht dargestellte, im Bereich der Durchtrittsöffnung 44 angeordnete Weiche, die wahlweise einen Übergang zwischen der im Wesentlichen vertikalen Führung 40 und der im Wesentlichen horizontalen Führung 58 (bzw. der Führung 42 im ersten Ausführungsbeispiel) ermöglicht oder ein horizontales Überfahren der Durchtrittsöffnung 44 beim Verfahren in die Verstau-Position oder aus der Verstau-Position (Figur 14) in die Ablageposition (Figur 13) steuert.

Beim Verfahren mittels eines elektrischen Antriebs erübrigen sich die Rastmulden 48 und die Federelemente 49, sofern dieser Antrieb über eine hinreichende Selbsthemmung verfügt.

In der Figur 17 ist eine Ausführungsform dargestellt, die sich insbesondere in der Gestaltung der ersten Führungsvorrichtung F1 von den in den Figuren 11 bis 16 dargestellten Ausführungsformen unterscheidet. Bei der Ausführungsform nach der Figur 17 ist keine obere Führung 52 vorgesehen und das Stellteil 53 entsprechend anders gestaltet. Das Stellteil 53 ist dabei aus einem Stellhebel 61 und einem in der Führung 54 geführten Führungsteil 62 gebildet, wobei das Führungsteil 62 fest, also auch drehfest an dem Stellhebel 61 befestigt und derart gestaltet ist, dass dieses nur entlang der wegabhängigen Längsrichtung L54 der Führungsbahn der Führung 54 in dieser verschiebbar ist, also gegenüber dieser zumindest um eine Drehachse quer zur Längsrichtung L54 nicht drehbar ist. Dabei kann vorgesehen sein, dass das Führungsteil 62 um die Längsrichtung L54 drehbar ist. Alternativ dazu kann das Führungsteil 62 in seinem Querschnitt formschlüssig mit dem Querschnitt der Führungsbahn der Führung 54 zusammenwirken, so dass das Führungsteil 62 nicht um die Längsrichtung L54 drehbar ist.

Die Führungsbahn der Führung 54 muss nicht wie in der in der Figur 17 dargestellten Ausführungsform im unteren Bereich der 1 angeordnet sein. Durch entsprechende Gestaltung der ersten Führungsvorrichtung F1 insbesondere des Stellhebels 61, des Führungsteils 62 und der relativen Anordnung des Stellhebels 61 und des Führungsteils 62 zueinander kann die Führungsbahn der Führung 54 in der Ausführungsform der Figur 17 auch im oberen Bereich der Ablagefach-Vorrichtung 2 angeordnet sein.

## Patentansprüche

1. Vorrichtung (1) zum Abdecken eines Öffnungsbereichs (19) eines Ablagefachs (10), wobei sich das Ablagefach (10) von dieser in einer Ablagefach-Längsrichtung von einer an der vorderen Seite des Ablagefachs (10) ausgebildeten Ablagefach-Öffnung zu einer Rückwand (20) desselben erstreckt, die Vorrichtung (1) aufweisend:
eine Deckplatte (22), deren Innenfläche (30) in geöffnetem Zustand der Deckplatte (22) eine Ablagefläche bildet,
wobei die Vorrichtung eine erste Führungsvorrichtung (F1) und eine zweite Führungsvorrichtung (F2) aufweist,
wobei die erste Führungsvorrichtung (F1) zwei seitliche Führungen (70, 52) und zwei sich in der Ablagefach-Längsrichtung erstreckende seitliche Führungsteile (46; 53) zum Einsetzen in jeweils eine der seitlichen Führungen des Ablagefachs (10) zur Führung einer insbesondere translatorischen Bewegung der Führungsteile (46; 53) entlang der Ablagefach-Längsrichtung (L1) aufweist,
wobei ein oberer Bereich der Deckplatte (22) an einem Endstück oder an vorderen Enden der Führungsteile (46; 53) unter Ausbildung einer Drehachse (34) angelenkt ist und dadurch bewegbar an das Ablagefach (10) oder einer Befestigungsvorrichtung derselben gekoppelt ist,
wobei die zweite Führungsvorrichtung (F2) zwei sich quer zur ersten Führungsvorrichtung erstreckende zweite Führungen (40), die sich jeweils seitlich und
entlang der Öffnung des Ablagefachs quer zur Ablagefach-Längsrichtung erstrecken und in denen ein Führungsglied (32) geführt ist, aufweist,
wobei die Abdeckplatte (22) zumindest ein Führungsglied (32) an ihrer Unterkante (26) aufweist und der untere Bereich (B2) der Deckplatte (22) bewegbar an das Ablagefach (10) oder einer Befestigungsvorrichtung derselben gekoppelt ist,
wobei die erste Führungsvorrichtung (F1) und die zweite Führungsvorrichtung (F2) derart ausgeführt sind, dass die Abdeckplatte (22) aus ihrer Schließposition mittels wenigstens der zweiten Führung (40) zur Bildung der Ablagefläche in die horizontale Ablageposition oder dass die Abdeckplatte (22) in eine Verstau-Position verfahrbar ist, wobei die Abdeckplatte (22) den Öffnungsbereich (19) in der Ablagestellung und in der Verstau-Position ganz oder teilweise freigibt.

2. Vorrichtung nach dem Anspruch 1, wobei jedes der zwei sich in der Ablagefach-Längsrichtung erstreckenden seitlichen Führungsteile (46; 53) zum Einsetzen in jeweils eine an einer oberen Deckwand (14) des Ablagefachs (10) angeordneten seitliche Führung (70; 52) aus jeweils einer sich in der Ablagefach-Längsrichtung erstreckenden seitlichen Führungsleiste (46) gebildet ist, die zum Einsetzen in jeweils eine seitliche Führung (70) des Ablagefachs (10) vorgesehen sind und an deren vorderen Enden die Abdeckung (22) angelenkt ist.

3. Vorrichtung nach einem der Ansprühe 1 oder 2, wobei jede Führungsleiste (46) wenigstens eine Durchtrittsöffnung (44) aufweist, und wobei jede der zwei sich quer zur Ablagefach-Längsrichtung erstreckenden Führungen (40) mit jeweils einer der Führungsleiste (46) derart in Verbindung steht, dass die Führungsteile (46; 53), die in der sich quer zur Ablagefach-Längsrichtung erstreckenden Führungen (40) gelegen sind, über die jeweilige Durchtrittsöffnung (44) in die angeschlossene Führungsleiste (46) eingeführt werden kann.

4. Vorrichtung nach einem der vorstehenden Ansprüche, wobei jede Führungsleiste (46) eine Rastmulde (48) aufweist, in die das jeweilige Führungsglied (32) eingelegt werden kann, wenn dieses in der jeweiligen Führung (40) in Richtung zu der Führungsleiste (46), die an der jeweiligen Führung (40) angeordnet ist, bewegt wird, so dass mit in jeder der Rastmulden (48) eingelegtem Führungsglied (32) die Führungsleisten (46) in den Führungen (70) verschoben werden können, um die Abdeckung (22) in eine Stellung zu bewegen, in der diese die Ablagefach-Öffnung freigibt und in das Ablagefach (10) eingefahren ist, und in der die Ablagefläche der Abdeckung (22) zur Ablage eines Gegenstands verwendbar ist.

5. Vorrichtung nach dem Anspruch 4, wobei an jeder der Führungsleisten (46) wenigstens ein elastisches Element oder Federelement (49) zum Eindrücken des Führungsgliedes (32) in die Rastmulde (48) angeordnet ist.

6. Vorrichtung nach dem Anspruch 1,
wobei die zwei sich in der Ablagefach-Längsrichtung erstreckenden seitlichen Führungsteile jeweils durch einen Führungshebel (53) realisiert sind, der derart an die jeweilige seitliche Führung (70; 52) des Ablagefachs (10) ankoppelbar ist, dass dieser translatorische Bewegungen entlang der Ablagefach-Längsrichtung ausführt, so dass die Abdeckung (22) mit den zwei Führungshebeln (53) verbunden ist, der an zwei parallelen Führungen (52, 54) verschiebbar geführt ist,
wobei an den vorderen Enden der Führungshebel (53) die Abdeckung (22) unter Ausbildung einer Drehachse (34) angelenkt ist.

7. Vorrichtung nach dem Anspruch 6, wobei bei der Vorrichtung zum Abdecken eines Ablagefachs (10) die zwei sich quer zur Ablagefach-Längsrichtung erstreckenden Führungen (40) an jeweils eine zusätzliche, im oberen Bereich des Ablagefachs (10) angeordnete und sich in der Ablagefach-Längsrichtung erstreckende Führung (58) derart angeschlossen ist, dass das jeweilige Führungsglied (32) von der sich quer zur Ablagefach-Längsrichtung erstreckenden Führung (40) über eine jeweilige Durchtrittsöffnung (44) in die zusätzliche, im oberen Bereich des Ablagefachs (10) angeordnete Führung (58) einführbar ist und umgekehrt, so dass die Abdeckung (22) in eine Stellung bewegt werden kann, in der diese die Ablagefach-Öffnung freigibt und in das Ablagefach (10) eingefahren ist, und in der die Ablagefläche der Abdeckung (22) zur Ablage eines Gegenstands verwendbar ist.

8. Vorrichtung nach einem der Ansprüche 6 oder 7, wobei jeder Führungshebel (53) gebildet ist aus:
- einem ersten, sich quer zur Ablagefach-Längsrichtung erstreckenden Hebelarm (531), der an seinem unteren Ende in eine sich im unteren Bereich des Ablagefachs (10) angeordnete und sich entlang der Ablagefach-Längsrichtung erstreckende Führung (54) geführt ist,
- einem am ersten Hebelarm (531) befestigten zweiten Hebelarm (532), der scih von dem unteren Ende des ersten Hebelarms (531) aus in Richtung zur Bereich der Öffnung zu einem vorderen Ende erstreckt, wobei das vordere Ende des jeweiligen zweiten Hebelarms (532) gelegen ist, wobei an den vorderen Enden des jeweiligen zweiten Hebelarms (532) die Abdeckung (22) unter Ausbildung einer Drehachse (34) angelenkt ist.

9. Ablagefach-Vorrichtung, aufweisend:
- ein Gehäuse mit einer unteren Bodenwand (12), einer oberen Deckwand (14), die der unteren Bodenwand (12) gegenüber liegt, einer die untere Bodenwand (12) und die obere Deckwand (14) verbindende hintere Rückwand (20) und einer ersten und einer zweiten Seitenwand (16, 18), die jeweils auf einander gegenüber liegenden Seiten des Gehäuses die untere Bodenwand (12) und die obere Deckwand (14) und die hintere Rückwand (20) verbindet, so dass das Gehäuse eine Öffnung in einem vorderen Bereich desselben freigibt,
- eine Vorrichtung zum Abdecken eines Ablagefachs (10) nach einem der vorstehenden Ansprüche.

## Claims

1. Device (1) for covering an opening region (19) of a storage compartment (10), wherein the storage compartment (10) extends in a storage compartment longitudinal direction from a storage compartment opening which is formed at the front side of the storage compartment (10) to a rear wall (20) of the same, the storage compartment (10) comprising:
a cover plate (22) which comprises an inner surface (30), wherein the inner surface (30) forms a storage surface in an opened position of the cover plate (22),
wherein the device comprises a first guide device (F1) and a second guide device (F2),
wherein the first guide device (F1) comprises two lateral guides (70, 52) and two lateral guide parts (46; 53) which extend in the storage compartment longitudinal direction and which are provided for insertion in a respective one of the lateral guides of the storage compartment (10) for guidance of a particularly translatory movement of the guide parts (46; 53) along the storage compartment longitudinal direction (L1),
wherein an upper region (B1) of the cover plate (22) is articulated at an end piece or at front ends of the guide parts (46; 53) with defining of an rotary axis (34), wherein the upper region (B1) is thereby movably coupled with the storage compartment (10) or a mounting device of the same,
wherein the second guide device (F2) comprises two guides (40) which extend transversely to the first guide device and respectively laterally and along the opening of the storage compartment transversely to the storage compartment longitudinal direction and in which the guide member (32) is guided,
wherein the cover plate (22) comprises at least one guidance member (32) at ist lower edge (26) and wherein the lower region (B2) of the cover plate (22) is movably coupled to the storage compartment (10) or a mounting device of the same,
wherein the first guide device (F1) and the second guide device (F2) are embodied such that the cover plate (22) is movable from its closed position by means of at least the second guide (40) for the formation of the storage surface into the horizontal storage position or that the cover plate (22) is movable into a stowage position, wherein
the cover plate (22) fully or partially exposes the opening region (19) in the storage position and in the storage position.

2. Device according to claim 1, wherein each of the lateral guide parts (46; 53) which extend in the storage compartment longitudinal direction is provided for insertion in a respective lateral guide (70; 52) which is disposed at an upper cover wall (14) of the storage compartment (10) and is formed of a respective lateral guide strip (46) which extends in the storage compartment longitudinal direction, wherein the lateral guide strips (46) are provided for insertion in a respective lateral guide (70) of the storage compartment (10) and wherein to the front ends of the same is articulated to the cover (22).

3. Device according to one of claims 1 or 2, wherein each guide strip (46) comprises at least one passage opening (44), and wherein each of the two guides (40) extending transversely to the longitudinal direction of the storage compartment is connected with respectively a guide strip (46) such that the guide parts (46; 53), which are situated in the guides (40) extending transversely to the longitudinal direction of the storage compartment, can be introduced via the respective passage opening (44) into the associated guide strip (46).

4. Device according to one of the preceding claims, wherein each guide strip (46) comprises a detent depression (48), into which the respective guide member (32) can be inserted, when the latter is moved in the respective guide (40) in the direction of the guide strip (46) which is arranged on the respective guide (40), so that with a guide member (32) inserted in each of the detent depressions (48) the guide strips (46) can be displaced in the guides (70), in order to move the cover (22) into a position in which the latter exposes the storage compartment opening and is moved into the storage compartment (10), and in which the storage surface of the cover (22) is able to be used for the storage of an object.

5. Device according to claim 4, wherein on each of the guide strips (46) at least one elastic element or spring element (49) is disposed for pressing the guide member (32) into the detent depression (48).

6. Device according to claim 1,
- wherein the two lateral guide parts extending in the longitudinal direction of the storage compartment are realized respectively by a guide lever (53) which is able to be coupled to the respective lateral guide (70; 52) of the storage compartment (10) such that it carries out translatory movements along the longitudinal direction of the storage compartment, so that the cover (22) is connected with the two guide levers (53), which is displaceably guided on two parallel guides (52, 54),
- wherein the cover (22) is articulated at the front ends of the guide levers (53) with the formation of a rotation axis (34).

7. Device according to claim 6, wherein with the device (1) for covering a storage compartment (10) the two guides (40) extending transversely to the longitudinal direction of the storage compartment are connected to respectively an additional guide (58) arranged in the upper region of the storage compartment (10) and extending in the longitudinal direction of the storage compartment, such that the respective guide member (32) is able to be introduced from the guide (40) extending transversely to the longitudinal direction of the storage compartment via a respectively passage opening (44) into the additional guide (58) arranged in the upper region of the storage compartment (10) and vice versa, so that the cover (22) can be moved into a position in which it exposes the storage compartment opening and is moved into the storage compartment (10), and in which the storage surface of the cover (22) is able to be used for the storage of an object.

8. Device according to one of claims 6 or 7, wherein each guide lever (53) is formed from:
- a first lever arm (531) extending transversely to the longitudinal direction of the storage compartment, which is guided at its lower end into a guide (54) arranged in the lower region of the storage compartment (10) and extending along the longitudinal direction of the storage compartment,
- a second lever arm (532) fastened to the first lever arm (531), which second lever arm extends from the lower end of the first lever arm (531) out in the direction of the region of the opening to a front end, wherein the front end of the respective second lever arm (532) is situated, wherein the cover (22) is articulated at the front ends of the respective second lever arm (532) with the formation of a rotation axis (34).

9. Storage compartment device, comprising:
- a housing with a lower base wall (12), an upper cover wall (14), which lies opposite the lower base wall (12), a rear back wall (20) connecting the lower base wall (12) and the upper cover wall (14), and a first and a second lateral wall (16, 18), which respectively connects on sides of the housing lying opposite one another the lower base wall (12) and the upper cover wall (14) and the rear back wall (20), so that the housing exposes an opening in a front region thereof,
- a device for covering a storage compartment (10) according to one of the preceding claims.

## Revendications

1. Dispositif (1) pour recouvrir une zone d'ouverture (19) d'un compartiment de rangement (10), dans lequel le compartiment de rangement (10) s'étend de cette ouverture de compartiment de rangement réalisée sur le côté avant du compartiment de rangement (10) dans une direction longitudinale de compartiment de rangement jusqu'à une paroi arrière (20) de ce même, le dispositif (1) présentant :
une plaque de recouvrement (22) dont la surface intérieure (30) forme, à l'état ouvert de la plaque de recouvrement (22), une surface de rangement,
dans lequel le dispositif présente un premier dispositif de guidage (F1) et un deuxième dispositif de guidage (F2),
dans lequel le premier dispositif de guidage (F1) présente deux guidages latéraux (70, 52) et deux parties de guidage latérales (46 ; 53) s'étendant dans la direction longitudinale de compartiment de rangement pour la mise en place dans respectivement l'un des guidages latéraux du compartiment de rangement (10) pour guider un mouvement en particulier de translation des parties de guidage (46 ; 53) le long de la direction longitudinale (L1) de compartiment de rangement,
dans lequel une zone supérieure de la plaque de recouvrement (22) est articulée à une partie d'extrémité ou à des parties d'extrémité avant des parties de guidage (46 ; 53) en formant un axe de rotation (34) et est couplée de ce fait de manière mobile au compartiment de rangement (10) ou à un dispositif de fixation de cette même,
dans lequel le deuxième dispositif de guidage (F2) présente deux deuxièmes guidages (40) s'étendant transversalement au premier dispositif de guidage, lesquels s'étendent respectivement latéralement et le long de l'ouverture du compartiment de rangement, transversalement à la direction longitudinale de compartiment de rangement et dans lesquels un organe de guidage (32) est guidé,
dans lequel la plaque de recouvrement (22) présente au moins un organe de guidage (32) sur son bord inférieur (26) et la zone inférieure (B2) de la plaque de recouvrement (22) est couplée de façon mobile au compartiment de rangement (10) ou à un dispositif de fixation de cette même,
dans lequel le premier dispositif de guidage (F1) et le deuxième dispositif de guidage (F2) sont réalisés de manière à ce que la plaque de recouvrement (22) puisse être déplacée de sa position de fermeture, au moyen du deuxième guidage (40) au moins pour la formation de la surface de rangement, dans la position de rangement horizontale ou que la plaque de recouvrement (22) puisse être déplacée dans une position d'arrimage, dans lequel la plaque de recouvrement (22) libère totalement ou partiellement la zone d'ouverture (19) dans la position de rangement et dans la position d'arrimage.

2. Dispositif selon la revendication 1, dans lequel chacune des deux parties de guidage latérales (46 ; 53) s'étendant dans la direction longitudinale de compartiment de rangement pour la mise en place dans respectivement un guidage latéral (70 ; 52) disposé sur une paroi de recouvrement supérieure (14) du compartiment de rangement (10) est formée par respectivement une baguette de guidage latérale (46) s'étendant dans la direction longitudinale de compartiment de rangement, lesquelles sont prévues pour la mise en place dans respectivement un guidage latéral (70) du compartiment de rangement (10) et à l'extrémité avant desquelles le recouvrement (22) est articulé.

3. Dispositif selon l'une des revendications 1 ou 2, dans lequel chaque baguette de guidage (46) présente au moins une ouverture de traversée (44), et dans lequel chacun des deux guidages (40) s'étendant transversalement à la direction longitudinale de compartiment de rangement est en liaison avec respectivement l'une des baguettes de guidage (46) de manière à ce que les parties de guidage (46 ; 53), lesquelles sont situées dans les guidages (40) s'étendant transversalement à la direction longitudinale de compartiment de rangement, puissent être introduites via l'ouverture de traversée (44) respective dans la baguette de guidage (46) raccordée.

4. Dispositif selon l'une des revendications précédentes, dans lequel chaque baguette de guidage (46) présente une cavité d'arrêt (48) dans laquelle l'organe de guidage (32) respectif peut être placé lorsque celui-ci est déplacé dans le guidage (40) respectif en direction de la baguette de guidage (46) disposée sur le guidage (40) respectif de sorte qu'avec l'organe de guidage (32) placé dans chacune des cavités d'arrêt (48), les baguettes de guidage (46) peuvent être déplacées dans les guidages (70) pour déplacer le recouvrement (22) dans une position dans laquelle celui-ci libère l'ouverture de compartiment de rangement et est rentré dans le compartiment de rangement (10) et dans laquelle la surface de rangement du recouvrement (22) est utilisable pour le rangement d'un objet.

5. Dispositif selon la revendication 4, dans lequel au moins un élément élastique ou élément de ressort (49) est disposé au niveau de chacune des baguettes de guidage (46) pour enfoncer l'organe de guidage (32) dans la cavité d'arrêt (48).

6. Dispositif selon la revendication 1,
dans lequel les deux parties de guidage latérales s'étendant en direction longitudinale de compartiment de rangement sont respectivement réalisées par un levier de guidage (53) lequel peut être couplé au guidage latéral (70 ; 52) respectif du compartiment de rangement (10) de manière à ce que celui-ci exécute des mouvements de translation le long de la direction longitudinale de compartiment de rangement de sorte que le recouvrement (22) est relié aux deux leviers de guidage (53), lequel est guidé de manière coulissante au niveau de deux guidages (52, 54) parallèles,
dans lequel, au niveau des extrémités avant des leviers de guidage (53), le recouvrement (22) est articulé en formant un axe de rotation (34).

7. Dispositif selon la revendication 6, dans lequel le dispositif pour recouvrir un compartiment de rangement (10), les deux guidages (40) s'étendant transversalement à la direction longitudinale de compartiment de rangement, est relié à respectivement un guidage (58) supplémentaire disposé dans la zone supérieure du compartiment de rangement (10) et s'étendant dans la direction longitudinale de compartiment de rangement de manière à ce que l'organe de guidage (32) respectif peut être introduit depuis le guidage (40) s'étendant transversalement à la direction longitudinale de compartiment de rangement, via une ouverture de traversée (44) respective, dans le guidage (58) supplémentaire disposé dans la zone supérieure du compartiment de rangement (10) et inversement de sorte que le recouvrement (22) peut être déplacé dans une position dans laquelle celui-ci libère l'ouverture de compartiment de rangement et est rentré dans le compartiment de rangement (10) et dans laquelle la surface de rangement du recouvrement (22) est utilisable pour le rangement d'un objet.

8. Dispositif selon l'une des revendications 6 ou 7, dans lequel chaque levier de guidage (53) est formé par :
- un premier bras de levier (531) s'étendant transversalement à la direction longitudinale de compartiment de rangement, lequel est guidé à son extrémité inférieure dans un guidage (54) disposé dans la zone inférieure du compartiment de rangement (10) et s'étendant le long de la direction longitudinale de compartiment de rangement,
- un deuxième bras de levier (532) fixé au premier bras de levier (531), lequel s'étend à partir de l'extrémité inférieure du premier bras de levier (531) en direction de la zone d'ouverture vers une extrémité avant, dans lequel l'extrémité avant du deuxième bras de levier (532) respectif se situe, dans lequel le recouvrement (22) est articulé aux extrémités avant du deuxième bras de levier (532) respectif en formant un axe de rotation (34).

9. Dispositif de compartiment de rangement présentant :
- un boîtier avec une paroi de fond inférieure (12), une paroi de recouvrement supérieure (14) située en vis-à-vis de la paroi de fond inférieure (12), une paroi arrière (20) à l'arrière reliant la paroi de fond inférieure (12) et la paroi de recouvrement supérieure (14) et une première et une deuxième paroi latérale (16, 18) reliant respectivement, sur des côtés situés en vis-à-vis du boîtier, la paroi de fond inférieure (12) et la paroi de recouvrement supérieure (14) et la paroi arrière (20) à l'arrière, de sorte que le boîtier libère une ouverture dans une zone avant de ce même,
- un dispositif pour recouvrir un compartiment de rangement (10) selon l'une des revendications précédentes.
